# EUROPEAN PATENT APPLICATION

(11) **EP 3 439 243 A1**
(43) Date of publication of application: **06.02.2019**
(21) Application number: 17774995.9
(22) Date of filing: 27.03.2017
(51) Int. Cl.: H04L 12/28, H04W 84/18, H04W 88/04

(54) **NETWORK SYSTEM, COMMUNICATION DEVICE, AND COMMUNICATION METHOD**

(30) Priority: 29.03.2016 JP 2016066650
(71) Applicant: Furukawa Electric Co. Ltd., Tokyo 100-8322 (JP)
(72) Inventor: RIKISO, Masahiro, Tokyo 100-8322 (JP); KUMAGAI, Atsushi, Tokyo 100-8322 (JP); TSUJI, Yuto, Tokyo 100-8322 (JP); MIURA, Masayuki, Tokyo 100-8322 (JP)
(74) Representative: Horn Kleimann Waitzhofer Patentanwälte PartG mbB
(86) International application number: PCT/JP2017/012495
(87) International publication number: WO 2017/170458

(57) **Abstract**

[SUMMARY]

[OBJECT] To provide a network system which makes it possible to reduce the occurrence of a delay in data packet transfer processing even if periodic processing occurs.

[ORGANIZATION] In a network system having a plurality of communication devices 10-1 to 10-5, the communication devices each include: an executing means (control part 12) that executes periodic processing whose processing occurs periodically; and an adjusting means (control part 12) that adjusts an execution timing at which the periodic processing is executed by the executing means, according to states of the other communication devices.

## Description

### Technical Field

The present invention relates to a network system, a communication device, and a communication method.

### Background Art

Patent Document 1 discloses an art for efficiently searching for a traffic communication route that guarantees SLA (Service Level Agreement). Specifically, in the art disclosed in Patent Document 1, a control server stochastically selects a next hop node hop by hop to decide a route from a transmission-source node up to a transmission-destination node. Then, when selecting the next hop node, the control server determines whether or not communication performance in the route from the transmission-source node up to the next hop node satisfies a performance requirement. If the communication performance in the route satisfies the performance requirement, the control server repeats the selection of a next hop node again. On the other hand, if the communication performance in the route does not satisfy the performance requirement, the control server searches for a route from the transmission-source node afresh. In the art disclosed in Patent Document 1, such processing makes it possible to find the route satisfying the performance requirement defined in SLA, from the transmission-source node up to the transmission-destination node without passing a dummy traffic.

### Prior Art Document

### Patent Document

Patent Document 1: Japanese Patent Application Laid-open No. 2013-197734

### Disclosure of the Invention

### Problems to be Solved by the Invention

Incidentally, in a network system having a plurality of communication devices (for example, routers) as in the art disclosed in Patent Document 1, the communication devices periodically communicate with one another to keep information in their routing tables up-to-date. Further, there can also be internal processing which is periodically executed using timer interrupt. If the occurrence timing of such periodic processing and the timing of data packet transfer processing coincide with each other, the data packet transfer processing may be kept on standby, and in such a case, there is a problem that a delay occurs in the packet transfer.

In particular, in a communication route in which the number of times the communication is relayed is large, every time a data packet passes through a communication device, it may coincide with the timing of the periodic processing (of each communication device) in the worst case, and in such a case, there is a problem that a non-negligibly large communication delay occurs.

Therefore, it is an object of the present invention to provide a network system, a communication device, and a communication method which make it possible to reduce the occurrence of a delay in data packet transfer processing even if periodic processing occurs.

### Means for Solving the Problems

In order to solve the aforesaid problem, the present invention is a network system having a plurality of communication devices, the network system characterized in that the communication devices each include: an executing means that executes periodic processing whose processing occurs periodically; and an adjusting means that adjusts an execution timing of the periodic processing executed by the executing means, according to states of the other communication devices.

Such a configuration makes it possible to reduce the occurrence of a delay in data packet transfer processing even if the periodic processing occurs.

Further, the present invention is characterized in that the periodic processing is processing of detecting a neighboring communication device and periodically transmitting a Hello packet for maintaining the connection with the detected communication device.

Such a configuration makes it possible to prevent data packet transfer from being delayed due to the processing of transmitting the Hello packet.

Further, the present invention is characterized in that, when the Hello packet is received from the other communication device, the adjusting means adjusts the executing means so as to make the Hello packet transmitted after a predetermined time passes from the reception.

Such a configuration makes it possible to prevent a delay in data packet transfer since the transmission timing of the Hello packet is shifted based on the reception timing.

Further, the present invention is characterized in that the adjusting means adjusts the executing means so as to make the Hello packet transmitted at a timing not coinciding with transmission timings by the other communication devices.

Such a configuration makes it possible to prevent a delay in data packet transfer since the transmission timing of the Hello packet is adjusted so as not to coincide with those by the other communication devices.

Further, the present invention is characterized in that the adjusting means adjusts the executing means so as to make the Hello packet transmitted at a timing calculated based on an own IP address.

Such a configuration makes it possible to easily find a non-coinciding transmission timing of the Hello packet, owing to the use of the IP address.

Further, the present invention is characterized in that the adjusting means adjusts the executing means so as to make the Hello packet transmitted at the same timing as transmission timings by the other communication devices.

Such a configuration makes it possible to lower a probability with which the timing of transfer processing of a data packet coincides with the timing of transmission and reception processing of the Hello packet, owing to the transmission of the hello packets at the same timing.

Further, the present invention is a communication device used in a network system where a plurality of the communication devices exist, the communication device characterized by including: an executing means that executes periodic processing whose processing occurs periodically; and an adjusting means that adjusts an execution timing of the periodic processing executed by the executing means, according to states of the other communication devices.

Such a configuration makes it possible to reduce the occurrence of a delay in data packet transfer processing even if the periodic processing occurs.

Further, the present invention is a communication method of a network system where a plurality of communication devices exist, the method characterized in that the communication devices each include: an executing step of executing periodic processing whose processing occurs periodically; and an adjusting step of adjusting an execution timing of the periodic processing executed in the executing step, according to states of the other communication devices.

Such a method makes it possible to reduce the occurrence of a delay in data packet transfer processing even if the periodic processing occurs.

### Effect of the Invention

According to the present invention, it is possible to provide a network system, a communication device, and a communication method which make it possible to reduce the occurrence of a delay in data packet transfer processing even if periodic processing occurs.

### Brief Description of Drawings

Fig. 1 is a diagram illustrating a configuration example of a network system of a first embodiment of the present invention.
Fig. 2 is a diagram illustrating a detailed configuration example of a communication device illustrated in Fig. 1.
Fig. 3 is an explanatory diagram of the operation of a conventional example.
Fig. 4 is an explanatory diagram of the operation of the conventional example.
Fig. 5 is an explanatory chart of the operation of the conventional example.
Fig. 6 is an explanatory diagram of the operation of a first embodiment of the present invention.
Fig. 7 is an explanatory chart of the operation of the first embodiment of the present invention.
Fig. 8 is an explanatory flowchart of the operation of the first embodiment of the present invention.
Fig. 9 is an explanatory diagram of the operation of a second embodiment of the present invention.
Fig. 10 is an explanatory chart of the operation of the second embodiment of the present invention.
Fig. 11 is an explanatory flowchart of the operation of the second embodiment of the present invention.
Fig. 12 is an explanatory chart of the operation of a third embodiment of the present invention.
Fig. 13 is an explanatory chart of the operation of the third embodiment of the present invention.
Fig. 14 is an explanatory flowchart of the operation of the third embodiment of the present invention.
Fig. 15 is an explanatory flowchart of the operation of the third embodiment of the present invention.
Fig. 16 is an explanatory flowchart of the operation of the third embodiment of the present invention.

### Modes for Carrying out the Invention

Next, embodiments of the present invention will be described.

### (A) Explanation of Configuration of First Embodiment of Present Invention

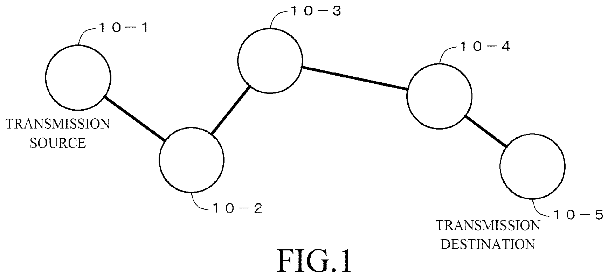

Fig. 1 is a diagram illustrating a configuration example of a network system according to a first embodiment of the present invention. As illustrated in Fig. 1, the network system according to the first embodiment of the present invention includes communication devices 10-1 to 10-5 functioning as nodes of a network.

The communication devices 10-1 to 10-5 illustrated in Fig. 1 each perform route construction based on an on-demand protocol by AODV (Ad hoc On-Demand Distance Vector) of MANET (Mobile Ad hoc Network).

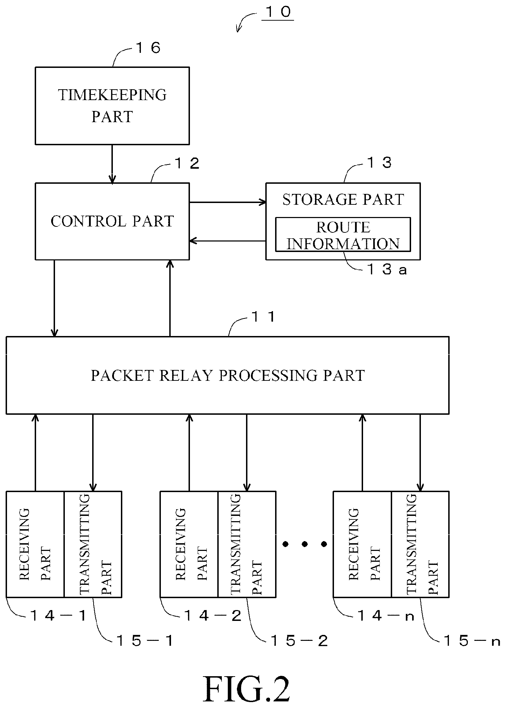

Fig. 2 is a diagram illustrating a configuration example of the communication devices 10-1 to 10-5 illustrated in Fig. 1. Since the communication devices 10-1 to 10-5 have the same configuration, a communication device 10 representing these will be described below.

As illustrated in Fig. 2, the communication device 10 has a packet relay processing part 11, a control part 12, a storage part 13, receiving parts 14-1 to 14-n, transmitting parts 15-1 to 15-n, and a timekeeping part 16.

Here, in response to the control by the control part 12, the packet relay processing part 11 sends out packets received by the receiving parts 14-1 to 14-n, from the corresponding transmitting parts 15-1 to 15-n according to information stored in headers of the packets. The control part 12 rewrites the headers of the received packets according to route information 13a stored in the storage part 13 to transmit the packets via the packet relay processing part 11.

The storage part 13 is constituted by a semiconductor memory, and it not only stores the route information 13a which is information used for transferring packets but also stores programs and data used for executing later-described processing. The receiving parts 14-1 to 14-n each receive a packet from another communication device. Further, the transmitting parts 15-1 to 15-n each transmit a packet to another communication device. The timekeeping part 16 checks time to supply it to the control part 12.

### (B) Explanation of Operation of First Embodiment of Present Invention

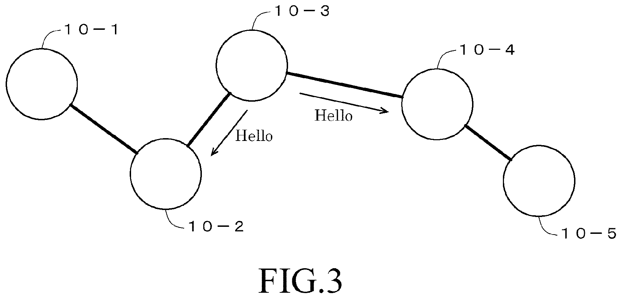

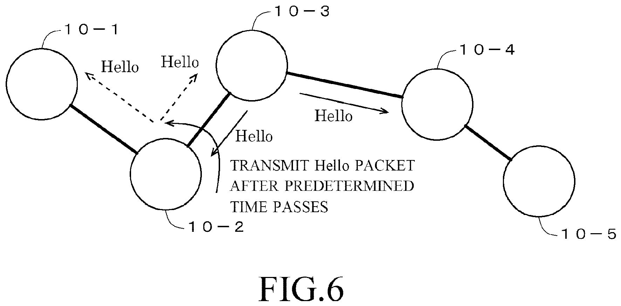

Next, the operation of the first embodiment of the present invention will be described. The following describes a problem in the operation of a conventional example with reference to Fig. 3 to Fig. 5 and then describes the operation of the first embodiment with reference to Fig. 6 to Fig. 8.

In the AODV protocol, an adjacent communication device is detected and in addition, in order to maintain the connection with the adjacent communication device, a Hello packet is transmitted/received to/from the adjacent communication device at predetermined intervals. Owing to such a Hello packet, it is possible to detect an IP address of the adjacent communication device and manage the adjacent communication device by using the IP address. The Hello packet is a packet periodically transmitted at, for example, 10- to 40-second intervals by broadcasting, with its TTL (Time to Live) being set to 1. A value of TTL decreases by 1 every time the Hello packet passes through a communication device once, and accordingly, such a Hello packet reaches all the adjacent communication devices. For example, in the example illustrated in Fig. 3, the Hello packet transmitted by the communication device 10-3 reaches the communication devices 10-2, 10-4 adjacent thereto.

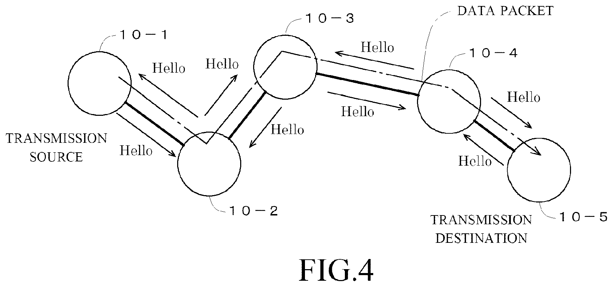

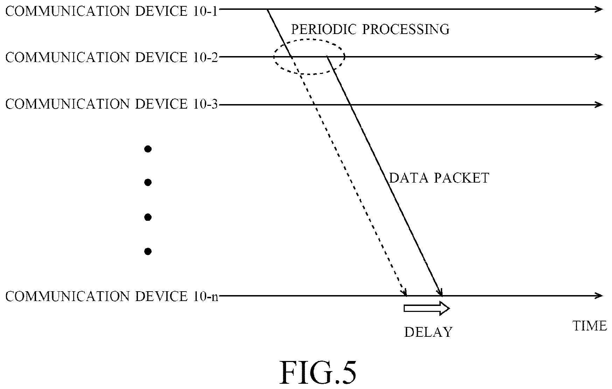

Incidentally, in a case where, as illustrated in Fig. 4, a data packet indicated by the alternate long and short dash line is transmitted from the communication device 10-1 which is a transmission source to the communication device 10-5 which is a transmission destination, if this transmission coincides with the transmission timing of a Hello packet or the reception timing of a Hello packet, the transfer of the data packet is delayed by the time required to process the Hello packet. Fig. 5 is a chart to explain, on a timeline, a state where the delay occurs. In Fig. 5, the data packet transmitted from the communication device 10-1 to the communication device 10-n (n = 5 in the example in Fig. 3) temporally coincides with periodic processing (for example, the transmission or reception processing of a Hello packet) executed by the communication device 10-2, and accordingly, an arrival instant of the data packet at the communication device 10-n delays as indicated by the outline arrow. If the coincidence with the processing timing of a Hello packet occurs every time the data packet is transferred, a non-negligibly large delay occurs. Therefore, in order to reduce the maximum transfer delay time of the whole network system, it is required to appropriately decide the processing timing of a Hello packet.

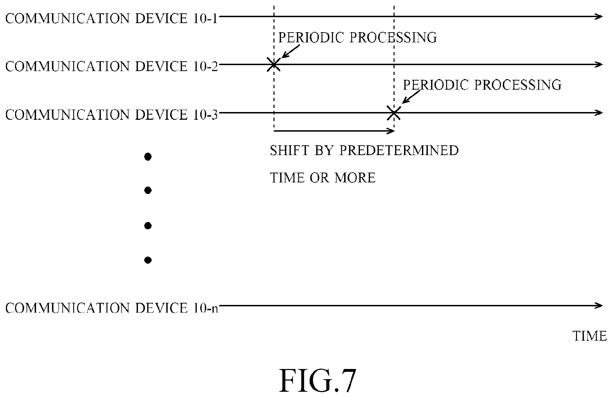

Fig. 6 is an explanatory diagram of the operation of the first embodiment of the present invention. In the first embodiment, when receiving a Hello packet from another communication device, the communication devices are each configured to store a reception time of the Hello packet, and transmit an own Hello packet after a predetermined time (a sufficiently longer time than the time required for the transfer processing of a data packet (for example, 50 mn)) passes after the time when the Hello packet is stored. Fig. 7 is a chart illustrating the operation of the first embodiment on a timeline. As illustrated in Fig. 7, in the first embodiment, in a case where, for example, the communication device 10-3 receives a Hello packet from the communication device 10-2, the communication device 10-2 shifts the transmission timing of its own Hello packet by a predetermined time or more and executes the transmission.

Such a configuration makes it possible to disperse transmission timings of Hello packets to some degree on the timeline, and accordingly, at least between the adjacent communication devices, it is possible to prevent the coincidence with the processing timing of a Hello packet every time the transfer is executed. As a result, where the maximum number N of communication devices in which the coincidence with the processing of the Hello packet is assumed to occur is the number of hops, N can be reduced to N/2.

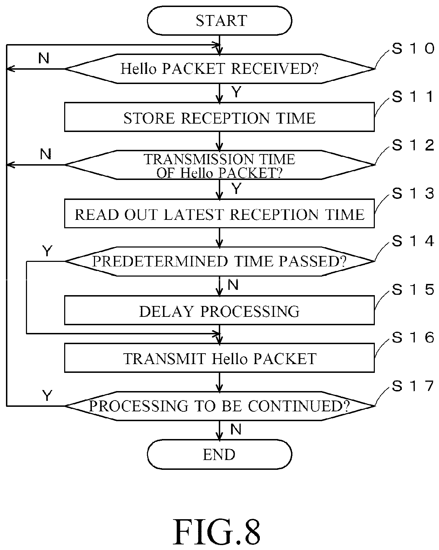

Fig. 8 is an example of a flowchart for achieving the operation of the first embodiment. The flowchart illustrated in Fig. 8 is executed in each of the communication devices 10-1 to 10-5 illustrated in Fig. 1. When the processing of the flowchart illustrated in Fig. 8 is started, the following steps are executed.

At Step S10, the control part 12 determines whether or not a Hello packet has been received from an adjacent communication device, and when determining that the Hello packet has been received (Step S10: Y), goes to Step 511, and otherwise (Step S10: N), repeats the same processing. For example, in a case where the communication device 10-3 illustrated in Fig. 1 receives the Hello packet from the communication device 10-2, the control part 12 determines as Y to go to Step S11.

At Step S11, the control part 12 obtains a time at which the Hello packet is received at Step S10, from the timekeeping part 16 and stores the time in the storage part 13. For example, in a case where the time at which the Hello packet is received by the communication device 10-3 from the communication device 10-2 is 0 hr. 0 min. 0.100 sec., this time is stored in the storage part 13 of the communication device 10-3.

At Step S12, the control part 12 determines whether or not it is already the transmission timing of an own Hello packet, by referring to an output of the timekeeping part 16, and when determining that it is already the transmission timing (Step S12: Y), goes to Step S13, and otherwise (Step S12: N), returns to Step S10 to repeat the same processing as that in the previously described case. For example, in a case where a Hello interval meaning a transmission interval of a Hello packet is set to ten seconds, the control part 12 determines as Y if ten seconds has passed from the previous transmission, and goes to Step S13.

At Step S13, the control part 12 reads out the latest reception time from the storage part 13. In more detail, since reception times of Hello packets from adjacent communication devices are stored by the processing at Step S10 to Step S12, it reads out the latest time among the stored times. For example, in the example of the communication device 10-3, if the reception time from the communication device 10-4 temporally follows that from the communication device 10-2, the reception time from the communication device 10-4 is read out.

At Step S14, the control part 12 determines whether or not the predetermined time has passed from the latest reception time read out at Step S13, and when determining that the predetermined time has passed (Step S14: Y), goes to Step S16, and otherwise (Step S14: N), goes to Step S15. For example, if 50 ms has passed from the latest reception time, the control part 12 goes to Step S16, and otherwise, goes to Step S15.

At Step S15, the control part 12 executes delay processing. In more detail, it executes processing of waiting until, for example, 50 ms passes from the latest reception time.

At Step S16, the control part 12 executes processing of transmitting a Hello packet to the adjacent communication device. As a result, the Hello packet is transmitted to the adjacent communication device, and in the adjacent communication device receiving such a Hello packet, the same processing as that in Fig. 8 is executed, and the transmission timing is adjusted according to the reception time.

At Step S17, the control part 12 determines whether to continue the processing or not, and when determining not to continue the processing (Step S17: N), ends the processing, and otherwise (Step S17: Y), returns to Step S10 to repeat the same processing as that in the previously described case.

As described above, in the first embodiment of the present invention, since a Hello packet is transmitted after the predetermined time passes from the reception of a Hello packet, it is possible to prevent the timing coincidence of the transmission and reception of Hello packets to/from the adjacent communication device and prevent the transfer of a data packet from being delayed as a result of the coincidence.

### (C) Explanation of Second Embodiment of Present Invention

Next, a second embodiment of the present invention will be described. Since the configuration of the second embodiment is the same as those in Fig. 1 and Fig. 2 and processing executed by the control part 12 is different, the description of the configuration will be skipped and the operation will be described.

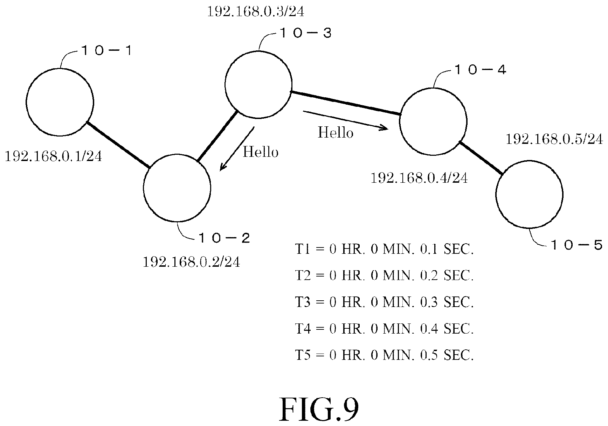

In the second embodiment, the communication devices 10-1 to 10-5 transmit respective Hello packets at different times T1 to T5. Note that the second embodiment uses IP addresses assigned to the respective communication devices 10-1 to 10-5, as a method of the transmission at the different times. In more detail, the IP address in the network illustrated in Fig. 9 is composed of 32 bits, and out of the 32 bits, significant 24 bits indicate a network part, and less significant 8 bits indicate a host part. In such a case, since, as an address value of the host part, a unique value is assigned to each of the communication devices 10-1 to 10-5, the host part is converted to a value corresponding to time, and the obtained time is set as a transmission timing.

As an example, X hr. Y min. Z sec. + the value of the host part can be set as the transmission time. For example, in the example illustrated in Fig. 9, in a case where the IP addresses of the communication devices 10-1 to 10-5 are "192.168.0.1/24" to "192.168.0.5/24" respectively and a reference time is 0 hr. 0 min. 0 sec., the transmission times T1 to T5 of the communication devices 10-1 to 10-5 are "0 hr. 0 min. 0.1 sec." to "0 hr. 0 min. 0.5 sec.". As a result, the transmission timings of the communication devices 10-1 to 10-5 are deviated by 0.1 seconds (= 100 ms), which can prevent the timing coincidence of the transmission of Hello packets.

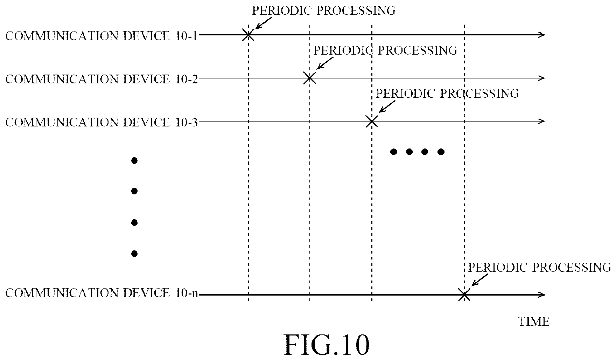

According to the second embodiment, since it is possible to disperse the transmission timings of Hello packets by the communication devices on the timeline as illustrated in Fig. 10, it is possible to prevent the transmission or reception timings of the Hello packets by the plural communication devices and the transfer of a data packet from coinciding with each other.

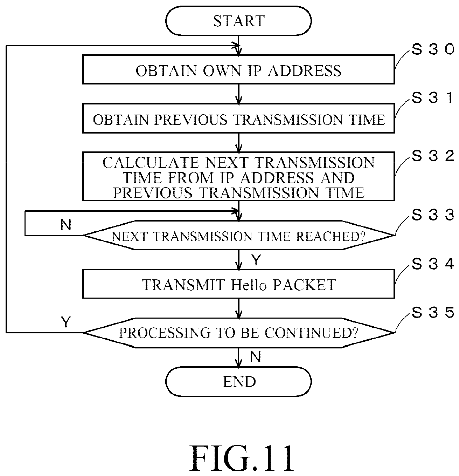

Fig. 11 is an explanatory flowchart of an example of processing executed in the second embodiment. The flowchart illustrated in Fig. 11 is executed in each of the communication devices 10-1 to 10-5 illustrated in Fig. 1. When the processing of the flowchart illustrated in Fig. 11 is started, the following steps are executed.

At Step S30, the control part 12 obtains the own IP address stored in, for example, the storage part 13. For example, in the communication device 10-3, "192.168.0.3/24" is obtained as the IP address.

At Step S31, the control part 12 obtains a previous transmission time of a Hello packet stored in, for example, the storage part 13. For example, 11 hr. 12 min. 15.0 sec. is obtained as the previous transmission time.

At Step S32, the control part 12 calculates a next transmission time from the IP address obtained at Step S30 and the previous transmission time obtained at Step S31. For example, in the communication device 10-3, in a case where a Hello interval is ten seconds, the previous transmission time of the Hello packet is 11 hr. 12 min. 15.0 sec. and the IP address is "192.168.0.3/24", 11 hr. 12 min. 25.3 sec. (= 11 hr. 12 min. 15.0 sec. + 10 seconds + 0.3 seconds) is calculated as the next transmission time. Incidentally, in the communication device 10-1, 11 hr. 12 min. 25.1 sec. is calculated as the next transmission time, in the communication device 10-2, 11 hr. 12 min. 25.2 sec. is calculated as the next transmission time, in the communication device 10-4, 11 hr. 12 min. 25.4 sec. is calculated as the next transmission time, and in the communication device 10-5, 11 hr. 12 min. 25.5 sec. is calculated as the next transmission time.

At Step S33, the control part 12 determines whether or not the current time has reached the next transmission time by referring to the current time output by the timekeeping part 16, and when determining that the current time has reached the next transmission time (Step S33: Y), goes to Step S34, and otherwise (Step S33: N), repeats the same processing.

At Step S34, the control part 12 transmits a Hello packet to adjacent communication devices. In the example here, the communication device 10-3 transmits the Hello packet to the adjacent communication devices 10-2, 10-4 at 11 hr. 12 min. 25.3 sec.

At Step S35, the control part 12 determines whether to continue the processing or not, and when determining not to continue the processing (Step S35: N), ends the processing, and otherwise (Step S35: Y), returns to Step S30 to repeat the same processing as that in the previously described case.

As described above, in the second embodiment of the present invention, the transmission timings of Hello packets are set to timings not coinciding with one another, using the IP address, which can prevent the transmission/reception timings of the Hello packets from coinciding with one another and prevent the transfer of a data packet from being delayed as a result of the coincidence.

### (D) Explanation of Third Embodiment of Present Invention

Next, a third embodiment of the present invention will be described. Since the configuration of the third embodiment is the same as those in Fig. 1 and Fig. 2 and processing executed by the control part 12 is different, the description of the configuration will be skipped and the operation will be described.

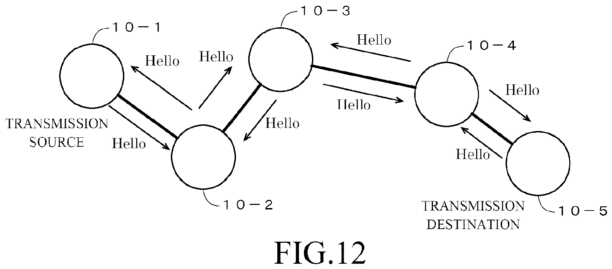

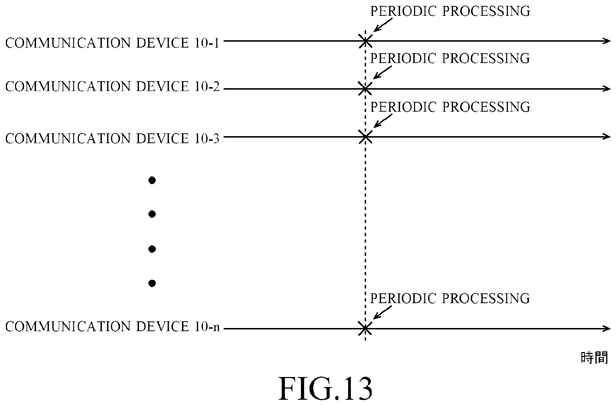

In the third embodiment, as illustrated in Fig. 12 and Fig. 13, the communication devices 10-1 to 10-5 transmit respective Hello packets at substantially the same time. As a result, transmission timings of the Hello packets by the communication devices 10-1 to 10-5 are concentrated at substantially the same timing on the timeline as illustrated in Fig. 13, which makes it possible to reduce a probability of the coincidence with the transfer timing of a data packet.

Incidentally, an example of a method for the transmission at the same time is a method in which the timekeeping parts 16 of all the communication devices 10-1 to 10-5 are synchronized and all the communication devices transmit the Hello packets at the same time. Another example of the method is a method in which, in a case where a reception timing of a Hello packet from another communication device is earlier than the own transmission timing, the own transmission timing is made earlier by a predetermined amount, thereby achieving the synchronization as the whole network. The following describes the latter method.

In the third embodiment, for example, if the time required for the transmission/reception processing of a Hello packet is 50 µs, making the transmission timings of Hello packets by all the communication devices 10-1 to 10-5 fall within a 50 µs period results in that the communication devices 10-1 to 10-5 transmit the Hello packets at substantially the same time. Since the communication devices 10-1 to 10-5 transmit the Hello packets at substantially the same time, it is possible to reduce the probability of the coincidence of transfer processing of a data packet and the transmission/reception processing of the Hello packets by the communication devices.

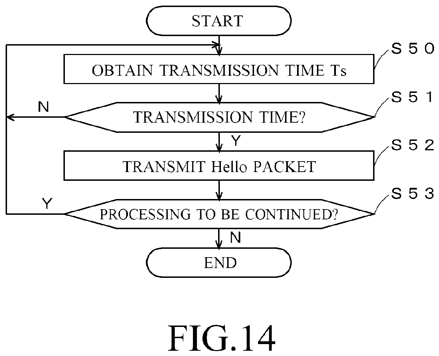

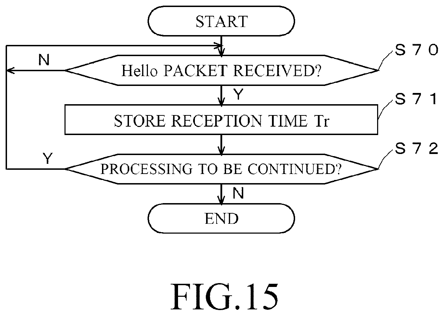

Next, an example of processing executed in the third embodiment will be described with reference to Fig. 14 to Fig. 16. Fig. 14 is processing of transmitting a Hello packet, and Fig. 15 is processing of receiving a Hello packet. Note that the processing in Fig. 14 and the processing Fig. 15 are executed in each of the communication devices 10-1 to 10-5, and since these pieces of processing are executed in parallel in each of the communication devices 10-1 to 10-5, it does not occur that a waiting time during one of these pieces of processing causes a delay in the other processing. The following first describes Fig. 14. When the flowchart illustrated in Fig. 14 is started, the following steps are executed.

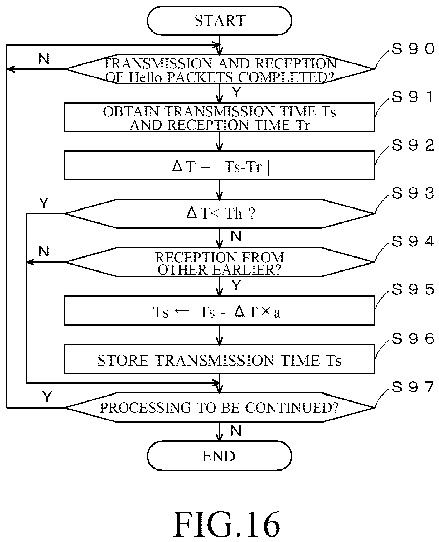

At Step S50, the control part 12 obtains, from the storage part 13, a transmission time Ts which is a planned transmission time of a Hello packet. Note that the transmission time Ts is calculated by processing at Step S95 and is stored in the storage part 13 by processing at Step S96 in Fig. 16 which will be described later.

At Step S51, the control part 12 determines whether or not the current time has reached the transmission time Ts by referring to the current time supplied from the timekeeping part 16, and when determining that the transmission time has been reached (Step S51: Y), goes to Step S52, and otherwise (Step S51: N), returns to Step S50 to repeat the same processing as that in the previously described case. For example, in a case where the transmission time Ts obtained at Step S50 becomes equal to the current time, the control part 12 determines as Y to go to Step S52.

At Step S52, the control part 12 transmits the Hello packet to adjacent communication devices. For example, in the case of the communication device 10-3, the Hello packet is transmitted to the communication device 10-2 and the communication device 10-4.

At Step S53, the control part 12 determines whether to continue the processing or not, and when determining not to continue the processing (Step S53: N), ends the processing, and otherwise (Step S53: Y), returns to Step S50 to repeat the same processing as that in the previously described case.

Next, the processing of receiving a Hello packet will be described with reference to Fig. 15. When the flowchart illustrated in Fig. 15 is started. the following steps are executed.

At Step S70, the control part 12 determines whether or not a Hello packet has been received from another communication device, and when determining that the Hello packet has been received (Step S70: Y), goes to Step S71, and otherwise (Step S70: N), repeats the same processing.

At Step S71, the control part 12 stores a reception time Tr. In more detail, from the timekeeping part 16, the control part 12 obtains a time when the Hello packet is received, and stores it as the reception time Tr in the storage part 13.

At Step S72, the control part 12 determines whether to continue the processing or not, and when determining not to continue the processing (Step S72: N), ends the processing, and otherwise (Step S72: Y), returns to Step S70 to repeat the same processing as that in the previously described case.

Next, processing of adjusting the transmission time will be described with reference to Fig. 16. Note that the processing in Fig. 16 is executed in each of the communication devices 10-1 to 10-5, and since this processing is executed in parallel with the processing in Fig. 14 and the processing in Fig. 15, it does not occur that a waiting time during one of these pieces of processing causes a delay in the other processing. When the processing illustrated in Fig. 16 is started, the following steps are executed.

At Step S90, the control part 12 determines whether or not the transmission/reception (both the transmission and the reception) of the Hello packets have been completed, and when determining that the transmission and reception have been completed (Step S90: Y), goes to Step S91, and otherwise (Step S90: N), repeats the same processing. For example, in a case where the transmission of the Hello packet is completed by the processing illustrated in Fig. 14 and the reception of the Hello packet is completed by the processing illustrated in Fig. 15, the control part 12 determines as Y to go to Step S91.

At Step S91, the control part 12 obtains the transmission time Ts and the reception time Tr from the storage part 13. For example, 10 hr. 10 min. 15.9 sec. is obtained as the transmission time Ts and 10 hr.10 min. 15.3 sec. is obtained as the reception time Tr.

At Step S92, the control part 12 calculates a difference value between the transmission time Ts and the reception time Tr (= |Ts - Tr|). Note that | | is a function for finding an absolute value. For example, in a case where the transmission time Ts is 10 hr. 10 min. 15.9 sec. and the reception time Tr is 10 hr. 10 min. 15.3 sec., the difference value ΔT = 0.6 seconds (= 110 hr. 10 min. 15.3 sec. - 10 hr. 10 min. 15.9 sec.|) is obtained.

At Step S93, the control part 12 compares the difference value ΔT calculated at Step S92 and a predetermined threshold value Th to determine whether or not ΔT < Th is satisfied, and when determining that ΔT < Th is satisfied (Step S93: Y), goes to Step S97, and otherwise (Step S93: N), goes to Step S94. For example, in a case where Th = 0.00005 (= 50 µs) and ΔT = 0.6 seconds, ΔT < Th is not satisfied, and therefore the control part 12 determines as N to go to Step S94.

At Step S94, the control part 12 determines whether or not the reception of the Hello packet from another communication device is earlier than the transmission of the own Hello packet, and in a case where the reception from the other communication device is earlier (Step S94: Y), the control part 12 goes to Step S95, and otherwise (Step S94: N), goes to Step S97. In the example here, since the transmission time Ts is 10 hr. 10 min. 15.9 sec. and the reception time Tr is 10 hr. 10 min. 15.3 sec., the control part 12 determines that the reception from the other communication device is earlier and determines as Y to go to Step S95.

At Step S95, the control part 12 sets a value equal to the next transmission time Ts from which a product of the difference value ΔT found at Step S92 and a constant a (0 < a < 1) is subtracted, as a new transmission time. For example, in a case where the next transmission time is 10 hr. 10 min. 25.9 sec., the difference value ΔT is 0.6 seconds, and a value of a is 0.5, 10 hr. 10 min. 25.6 sec. (= 10 hr. 10 min. 25.9 sec. - 0.6 x 0.5) is the next transmission time Ts. That is, for the purpose of the synchronization with the transmission time by the other communication device, the own transmission time is changed to an earlier time than the planned time.

At Step S96, the control part 12 stores the transmission time Ts found at Step S95 in the storage part 13. As a result, the transmission time Ts stored by this processing is used at Step S50 in Fig. 14, and the Hello packet is transmitted.

At Step S97, the control part 12 determines whether to continue the processing or not, and when determining not to continue the processing (Step S97: N), ends the processing, and otherwise (Step S97: Y), returns to Step S90 to repeat the same processing as that in the previously described case.

According to the above processing, in the case where the transmission time of the own Hello packet is later than the transmission time of the Hello packet by the other communication device, the difference value ΔT therebetween is calculated, and the value equal to the difference value ΔT multiplied by the predetermined constant a is subtracted from the next transmission time, and therefore by repeating such processing, it is possible to make the next transmission time close to the transmission time by the other communication device. Note that the above processing is repeated until ΔT < Th is satisfied. For example, in a case where the time required for transferring a Hello packet is 50 µs, by setting Th to 50 µs, it is possible to make the transmission and reception timings of the Hello packets by all the communication devices fall within a 50 µs period as a result of the repeated processing.

### (E) Explanation of Modification Example

The above embodiments are only examples, and it goes without saying that the present invention is not limited to the above-described cases. For example, in the description of the above first to third embodiments, the case where the communication devices 10-1 to 10-5 are wire-connected is taken as an example, but they may be configured to be wirelessly connected. In this case, in the configuration illustrated in Fig. 2, the receiving parts 14-1 to 14-n and the transmitting parts 15-1 to 15-n are replaced by radio transmitting and receiving parts.

Further, in the above first to third embodiments, the five communication devices 10-1 to 10-5 are provided for the simplification of the drawings, but the number of the communication devices may be six or more. Of course, the number of the communication devices may be four or less.

Further, in the processing illustrated in Fig. 8 of the first embodiment, the Hello packet is transmitted when the predetermined time passes from the latest reception time, but the Hello packet may be transmitted when a time corresponding to a value obtained based on random numbers passes, instead of when the predetermined time passes. Such processing enables the dispersion in the transmitting timing.

Further, in the processing illustrated in Fig. 11 of the second embodiment, the Hello packet is transmitted at the timing not coinciding with those by the other communication devices, based on the IP addresses, but the transmission time may be decided based on unique information other than the IP addresses.

Further, in the processing illustrated in Fig. 16 of the third embodiment, the transmission timing by the own communication device is made earlier in the case where the reception from the other communication device is earlier, but the transmission timing may be made later in a case where the transmission timing by the own communication device is earlier.

Further, in the first to third embodiments, the case where the transmission/reception of the Hello packet is the periodic processing whose processing periodically occurs is described as an example, but it goes without saying that the present invention is applicable to other periodic processing.

### Explanation of Reference Signs

- 10-1 to 10-5: communication device
- 11: packet relay processing part
- 12: control part
- 13: storage part
- 13a: route information
- 14-1 to 14-n: receiving part
- 15-1 to 15-n: transmitting part
- 16: timekeeping part

## Claims

1. A network system having a plurality of communication devices, wherein the communication devices each comprises:
an executing means that executes periodic processing whose processing occurs periodically; and
an adjusting means that adjusts an execution timing of the periodic processing executed by the executing means, according to states of the other communication devices.

2. The network system according to claim 1, wherein the periodic processing is processing of detecting a neighboring communication device and periodically transmitting a Hello packet for maintaining connection with the detected communication device.

3. The network system according to claim 2, wherein, when the Hello packet is received from the other communication device, the adjusting means adjusts the executing means so as to make the Hello packet transmitted after a predetermined time passes from the reception.

4. The network system according to claim 2, wherein the adjusting means adjusts the executing means so as to make the Hello packet transmitted at a timing not coinciding with transmission timings by the other communication devices.

5. The network system according to claim 4, wherein the adjusting means adjusts the executing means so as to make the Hello packet transmitted at a timing calculated based on an own IP address.

6. The network system according to claim 2, wherein the adjusting means adjusts the executing means so as to make the Hello packet transmitted at the same timing as transmission timings by the other communication devices.

7. A communication device used in a network system where a plurality of the communication devices exist, the communication device comprising:
an executing means that executes periodic processing whose processing occurs periodically; and
an adjusting means that adjusts an execution timing of the periodic processing executed by the executing means, according to states of the other communication devices.

8. A communication method of a network system where a plurality of communication devices exist, the communication devices each comprising:
an executing step of executing periodic processing whose processing occurs periodically; and
an adjusting step of adjusting an execution timing of the periodic processing executed in the executing step, according to states of the other communication devices.

## Amended claims

### Amended claims under Art. 19.1 PCT

**1.** A network system having a plurality of communication devices, wherein the communication devices each comprises:
an executing means that executes periodic processing whose processing occurs periodically; and
an adjusting means that adjusts an execution timing of the periodic processing executed by the executing means, according to states of the other communication devices.

**2.** added) The network system according to claim 1, wherein the adjusting means adjusts the execution timing of the periodic processing so as to prevent the execution timing of the periodic processing from coinciding with an execution timing of the periodic processing by an adjacent one of the other communication devices and prevent a transfer of a data packet from being delayed as a result of the coincidence.

**3.** after amendment) The network system according to claim 1 or 2, wherein the periodic processing is processing of detecting a neighboring communication device and periodically transmitting a Hello packet for maintaining connection with the detected communication device.

**4.** after amendment) The network system according to claim 2 or 3, wherein, when the Hello packet is received from the other communication device, the adjusting means adjusts the executing means so as to make the Hello packet transmitted after a predetermined time passes from the reception.

**5.** after amendment) The network system according to claim 2 or 3, wherein the adjusting means adjusts the executing means so as to make the Hello packet transmitted at a timing not coinciding with transmission timings by the other communication devices.

**6.** after amendment) The network system according to claim 5, wherein the adjusting means adjusts the executing means so as to make the Hello packet transmitted at a timing calculated based on an own IP address.

**7.** after amendment) The network system according to claim 2 or 3, wherein the adjusting means adjusts the executing means so as to make the Hello packet transmitted at the same timing as transmission timings by the other communication devices.

**8.** after amendment) A communication device used in a network system where a plurality of the communication devices exist, the communication device comprising:
an executing means that executes periodic processing whose processing occurs periodically; and
an adjusting means that adjusts an execution timing of the periodic processing executed by the executing means, according to states of the other communication devices.

**9.** after amendment) A communication method of a network system where a plurality of communication devices exist, the communication devices each comprising:
an executing step of executing periodic processing whose processing occurs periodically; and
an adjusting step of adjusting an execution timing of the periodic processing executed in the executing step, according to states of the other communication devices.

Statement under Art. 19.1 PCT
International Application No.: PCT/JP2017/012495
 International Filing Date: March 27, 2017
 Applicant: FURUKAWA ELECTRIC CO., LTD. 2-3, Marunouchi 2-chome, Chiyoda-ku, Tokyo 1008322 Japan
 Agent: EMURA Yoshihiko 2433-15, Kawarabuki, Ageo-shi, Saitama 3620022 Japan +81-48-607-5781
 Applicant's or Agent's File reference: MP160320WOSO

Dear Sir/Madam
 The applicant, who received the International Search Report relating to the above identified International Application transmitted on June 13, 2017, hereby files an amendment under Article 19(1) as in the attached sheets.

We hereby would like to add a claim 2 and amend the claims 3-8.

The claim 2 is based on the paragraph [0036], [0038], and Fig. 8 of the description as filed.

The applicant also files as attached herewith a brief statement explaining the amendment and indicating any impact the amendment might have on the description or the drawings.
Contents of amendment
   (1) Amendment to add claim 2 is made.
   (2) Along with the addition of Claim 2, claim numbers and dependence in subsequent claims are amended.
Explanations
   Newly added claim 2 is "The network system according to claim 1, wherein the adjusting means adjusts the execution timing of the periodic processing so as to prevent the execution timing of the periodic processing from coinciding with an execution timing of the periodic processing by an adjacent one of the other communication devices and prevent a transfer of a data packet from being delayed as a result of the coincidence." By this amendment, adjustment is made so that the execution timings of the periodic processes do not overlap between adjacent communication devices, as a result transfer of data packets is not delayed.
   In the cited documents, it is disclosed that the transmission and reception timings of Hello packets do not overlap, but there is no mention of the delay of data packet transfer.
   The present invention has the effect of preventing the occurrence of the transfer delay of the data packet by temporally distributing the timing at which the periodic processing is executed.
